# DEMANDE DE BREVET EUROPEEN

(11) **EP 4 389 536 A1**
(43) Date de publication de la demande: **26.06.2024**
(21) Numéro de dépôt: 23217765.9
(22) Date de dépôt: 18.12.2023
(51) Int. Cl.: B60R 19/18

(54) **FACE AVANT POUR VÉHICULE AUTOMOBILE**

(30) Priorité: 19.12.2022 FR 2213844
(71) Demandeur: Compagnie Plastic Omnium SE, 69007 Lyon (FR)
(72) Inventeur: MONTANVERT, Pierre, 01150 SAINTE-JULIE (FR); RIVAL, Lionel, 01150 SAINTE-JULIE (FR)
(74) Mandataire: LLR

(57) **Abrégé**

La face avant (2) pour véhicule automobile comprend :
- une portion supérieure comprenant un panneau supérieur (6) et un module d'habillage,
- une portion inférieure comprenant un panneau inférieur (10), une extrémité supérieure du panneau inférieure (10) étant adjacente à une extrémité inférieure du panneau supérieur (6), dans laquelle le panneau inférieur (10) est configuré pour être déplaçable en direction d'un arrière du véhicule, indépendamment du panneau supérieur, lors d'un choc au niveau d'une deuxième surface externe (9) de la portion inférieure.

## Description

### Domaine technique de l'invention

L'invention concerne une face avant pour véhicule automobile ainsi qu'un véhicule automobile comprenant une telle face avant.

### Arrière-plan technique

On connaît déjà dans l'état la technique, un véhicule automobile comprenant une face avant, cette face avant comprenant notamment un module d'habillage pouvant intégrer des fonctionnalités techniques, telles que la présence de capteurs ou d'organes de signalisation, et des fonctionnalités esthétiques, telles que des organes de diffusion de motifs lumineux. Un tel module d'habillage présente une forte valeur ajoutée et est coûteux à fabriquer et fragile. L'agencement du module d'habillage dans la face avant entraine une exposition importante de celui-ci à des risques d'endommagement, par exemple lors d'un choc subi à l'avant du véhicule.

Lors d'un choc à faible vitesse ou un petit choc, tels que les chocs appelés choc « assurance », choc « parking » ou choc « réparabilité », l'objectif principal est de réduire les coûts de réparation et de protéger l'élément ou les éléments subissant directement ou indirectement le choc. Un choc à faible vitesse ou un petit choc sont des chocs à faible énergie cinétique, inférieure à 1 000 J. Typiquement, un choc « assurance » correspond à un choc à environ 15 km/h contre un mur fixe, tel que celui connu sous le nom de Danner ou encore AZT, ou à environ 8 km/h contre un angle de mur ou contre un poteau. Un choc « parking » est un choc survenant à moins de 8 km/h.

Ainsi, il est particulièrement souhaitable de prévenir l'endommagement du module d'habillage coûteux, notamment lors d'un choc à faible vitesse.

### Résumé de l'invention

L'invention a notamment pour but de réduire ou empêcher l'endommagement d'un module d'habillage, et plus particulièrement de protéger les composants onéreux qu'il intègre, d'une face avant d'un véhicule automobile lors d'un choc au niveau de la face avant, plus particulièrement lors d'un choc à faible vitesse.

À cet effet, l'invention a pour objet une face avant pour véhicule automobile comprenant :
- une portion supérieure présentant une première surface externe visible depuis l'extérieur du véhicule et comprenant un panneau supérieur en matière plastique et un module d'habillage comprenant un organe de diffusion d'ondes électromagnétiques et une surface externe transparente ou translucide auxdites ondes électromagnétiques, le module d'habillage étant destiné à être fixé à une structure support du véhicule,
- une portion inférieure, présentant une deuxième surface externe visible depuis l'extérieur du véhicule et comprenant un panneau inférieur en matière plastique, une extrémité supérieure du panneau inférieur étant adjacente à une extrémité inférieure du panneau supérieur, dans laquelle le panneau inférieur est configuré pour être déplaçable en direction d'un arrière du véhicule, indépendamment du panneau supérieur, lors d'un choc au niveau de la deuxième surface externe de la portion inférieure

Ainsi, lors d'un choc, le panneau inférieur qui rencontre un obstacle peut être déplacé vers l'arrière du véhicule sans que cela n'impacte le panneau supérieur, et plus généralement sans que cela n'impacte la portion supérieure comprenant le module d'habillage. Le risque d'endommager, lors d'un choc, le module d'habillage compris dans la portion supérieure est ainsi réduit, notamment pour les petits chocs et les chocs à faible vitesse. Le risque d'endommager le module d'habillage lors d'un choc est particulièrement réduit avec une face avant selon l'invention lorsque l'impacteur a une hauteur inférieure à celle d'une extrémité inférieure du panneau supérieur lorsque la face avant est montée sur un véhicule.

L'invention peut comporter l'une ou plusieurs des caractéristiques optionnelles suivantes, prises seules ou en combinaison :

Le panneau inférieur est configuré pour être déplaçable sur une course de 10 à 100 mm le long de l'axe longitudinal du véhicule, en direction d'un arrière du véhicule, indépendamment du panneau supérieur.

L'extrémité supérieure du panneau inférieur et l'extrémité inférieure du panneau supérieur forment des moyens complémentaires de fixation déformables ou frangibles du panneau inférieur au panneau supérieur configurés pour se déformer ou se rompre lors d'un choc au niveau de la deuxième surface externe de la portion inférieure.

L'extrémité supérieure du panneau inférieur forme un dégagement, l'extrémité inférieure du panneau supérieur étant agencée dans le dégagement à distance et en regard de l'extrémité supérieure du panneau inférieur.

L'extrémité supérieure du panneau inférieur forme une rainure et l'extrémité inférieure du panneau supérieur forme une languette agencée dans la rainure.

L'extrémité inférieure du panneau supérieur forme un dégagement, l'extrémité supérieure du panneau inférieur étant agencée dans le dégagement en regard de l'extrémité inférieure du panneau supérieur.

L'extrémité inférieure du panneau supérieur forme une rainure et l'extrémité supérieure du panneau inférieur forme une languette agencée dans la rainure.

La rainure et la languette s'étendent dans un même plan sensiblement horizontal lorsque la face avant est montée sur le véhicule.

La portion inférieure forme une proéminence par rapport à la portion supérieure au niveau d'une surface externe de la face avant.

La face avant comprend en outre deux unités optiques intégrées dans le module d'habillage, les unités optiques étant agencées respectivement au niveau de deux extrémités latérales opposées du module d'habillage.

L'invention a également pour objet un véhicule automobile comprenant une face avant telle que décrite précédemment.

### Brève description des figures

L'invention sera mieux comprise à la lecture de la description qui va suivre donnée uniquement à titre d'exemple et faite en se référant aux dessins annexés dans lesquels :
[Fig. 1] est une représentation schématique en perspective d'une partie avant d'un véhicule automobile comprenant une face avant selon un premier mode de réalisation de l'invention ;
[Fig. 2] est une représentation schématique de différents éléments de la face avant du véhicule automobile de la figure 1 ;
[Fig. 3] est une représentation schématique de côté d'une partie avant du véhicule automobile de la figure 1 ;
[Fig. 4] est une représentation schématique agrandie de la partie délimitée par le cercle C du véhicule automobile de la figure 3 ;
[Fig. 5] est une représentation similaire à celle de la figure 4, montrant le panneau inférieur après ou pendant un choc ;
[Fig. 6] est une représentation similaire à la figure 1 d'une partie avant d'un véhicule automobile selon un second mode de réalisation de l'invention ;
[Fig. 7] est une représentation similaire à la figure 4 d'un troisième mode de réalisation de l'invention ;
[Fig. 8] est une représentation similaire à la figure 3 d'une partie avant d'un véhicule automobile selon un quatrième mode de réalisation de l'invention ;
[Fig. 9] est une représentation similaire aux figure 4 (A) et 5 (B) du quatrième mode de réalisation de l'invention.

### Description détaillée

Dans la description détaillée, la direction longitudinale (ou axe X), la direction transversale (ou axe Y) et la direction verticale (ou axe Z) font références aux directions d'un véhicule automobile et sont illustrées sur les figures.

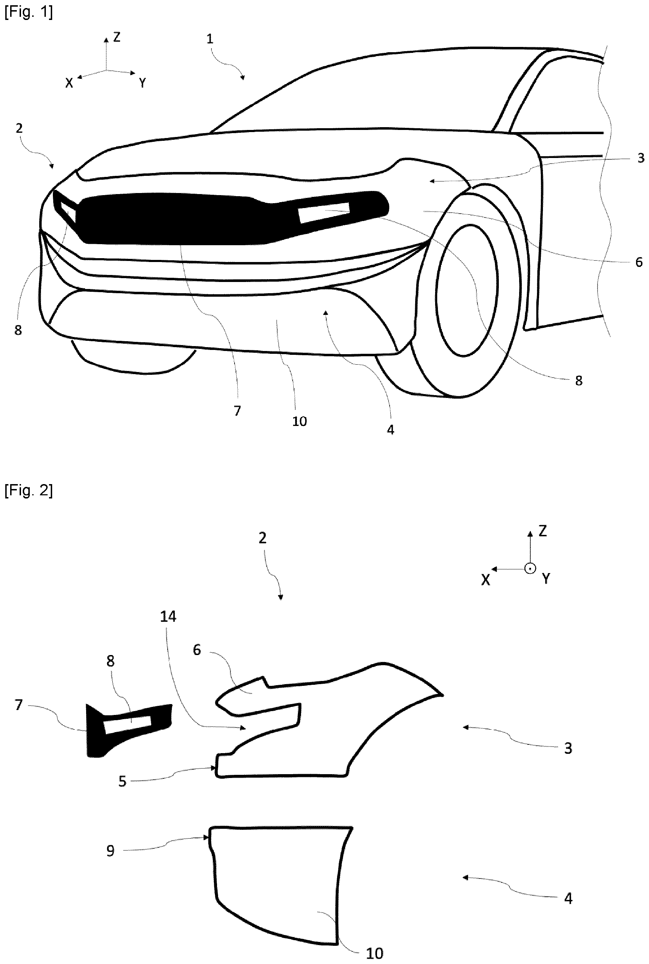

La figure 1 montre la partie avant d'un véhicule automobile 1 qui comprend une face avant 2 selon un premier mode de réalisation de l'invention. Selon l'invention, on entend par « face avant » la ou les pièces du véhicule 1 délimitant une surface externe visible depuis l'extérieur à l'avant du véhicule 1.

La face avant 2 comprend une portion supérieure 3 et une portion inférieure 4 (figure 2).

La portion supérieure 3 de la face avant 2 présente une première surface externe 5 visible depuis l'extérieur du véhicule automobile 1. La portion supérieure 3 comprend un panneau supérieur 6 et un module d'habillage 7.

Selon le premier mode de réalisation, le panneau supérieur 6 est réalisé en matière plastique. Il présente un orifice central dans lequel sont montés le module d'habillage 7 et des unités optiques 8. Dans le cas présent, les deux unités optiques 8 sont intégrées dans le module d'habillage 7 et sont agencées respectivement au niveau de deux extrémités latérales opposées du module d'habillage 7. Cette intégration des unités optiques 8 dans le module d'habillage permet de faciliter le montage de la face avant 2 sur le véhicule automobile 1 et d'améliorer l'esthétisme du véhicule 1 en permettant, par exemple, d'obtenir une continuité de forme entre le module d'habillage 7 et les unités optiques 8.

Le module d'habillage 7 est agencé de manière à ce que sa surface externe soit affleurante à la surface externe du panneau supérieur 6. La surface externe du module d'habillage 7 et la surface externe du panneau supérieur 6 sont en continuité de forme afin de créer un effet donnant l'illusion que la portion supérieure 3 est d'un seul tenant.

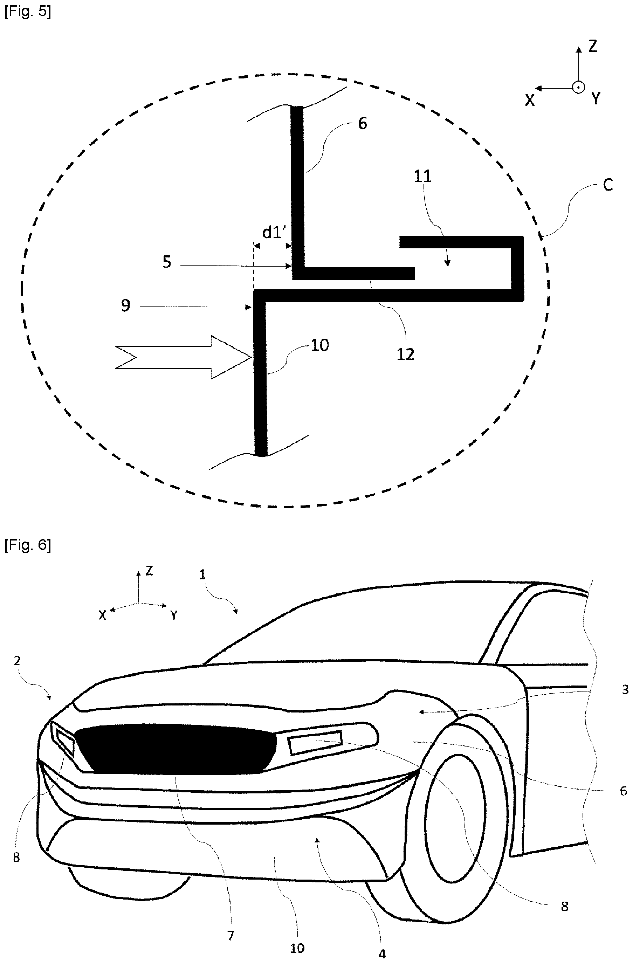

Selon un deuxième mode de réalisation présenté à la figure 6, la face avant 2 diffère en ce que les unités optiques 8 ne sont pas intégrées au module d'habillage 7. Les unités optiques 8 conservent la même position sur le véhicule 1 que dans le premier mode de réalisation de sorte que le module d'habillage 7, agencé entre ces unités optiques 8, est moins long que dans le premier mode de réalisation.

Dans le premier mode de réalisation, le module d'habillage 7 a une forme générale allongée s'étendant sur plus de 50 % de la largeur de la face avant 2. Plus particulièrement, dans le cas présent, le module d'habillage 7 s'étend sur environ 90 % de la largeur - c'est-à-dire la dimension suivant l'axe transversal Y - de la face avant 2. Bien entendu, selon des variantes de réalisation, le module d'habillage peut s'étendre sur moins de 50 % ou plus de 90 % de la face avant. Le module d'habillage 7 est destiné à être fixé sur une structure support du véhicule automobile 1, par exemple sur la caisse du véhicule automobile 1 ou sur une face avant technique du véhicule 1.

Le module d'habillage 7 comprend un organe de diffusion d'ondes électromagnétiques. Dans le cas présent, cet organe de diffusion d'ondes électromagnétiques est apte à émettre des ondes électromagnétiques dans le spectre visible, communément appelées lumière par la suite. Cet organe de diffusion comprend par exemple un guide de lumière couplé à un émetteur de lumière (non représentés). Selon d'autres modes de réalisation, l'organe de diffusion d'ondes électromagnétiques est apte à émettre d'autres types d'ondes électromagnétiques, par exemple des ondes infrarouges ou des ondes radioélectriques. On peut prévoir que le module d'habillage 7 comprend plusieurs organes de diffusion d'ondes électromagnétiques, chaque organe étant apte à diffuser un ou plusieurs types d'ondes électromagnétiques.

Le module d'habillage 7 comprend en outre une surface externe transparente ou translucide auxdites ondes électromagnétiques. Dans le cas présent, la surface externe est au moins transparente ou translucide à la lumière. Le module d'habillage 7 est ainsi apte à émettre de la lumière vers l'extérieur à travers la surface externe transparente ou translucide à la lumière afin, par exemple, de transmettre un signal lumineux. Par ailleurs, cette émission de lumière peut également être utilisée pour améliorer le rendu esthétique du module d'habillage 7. Selon un mode de réalisation particulier, la surface externe peut éventuellement dévier des ondes électromagnétiques, par exemple la lumière. Il est ainsi possible d'apporter avantageusement une correction optique devant les unités optiques 8.

La portion inférieure 4 présente une deuxième surface externe 9 visible depuis l'extérieur du véhicule 1 lorsque la face avant 2 est montée sur le véhicule 1. La portion inférieure 4 comprend notamment un panneau inférieur 10 réalisé, dans le cas présent, en matière plastique.

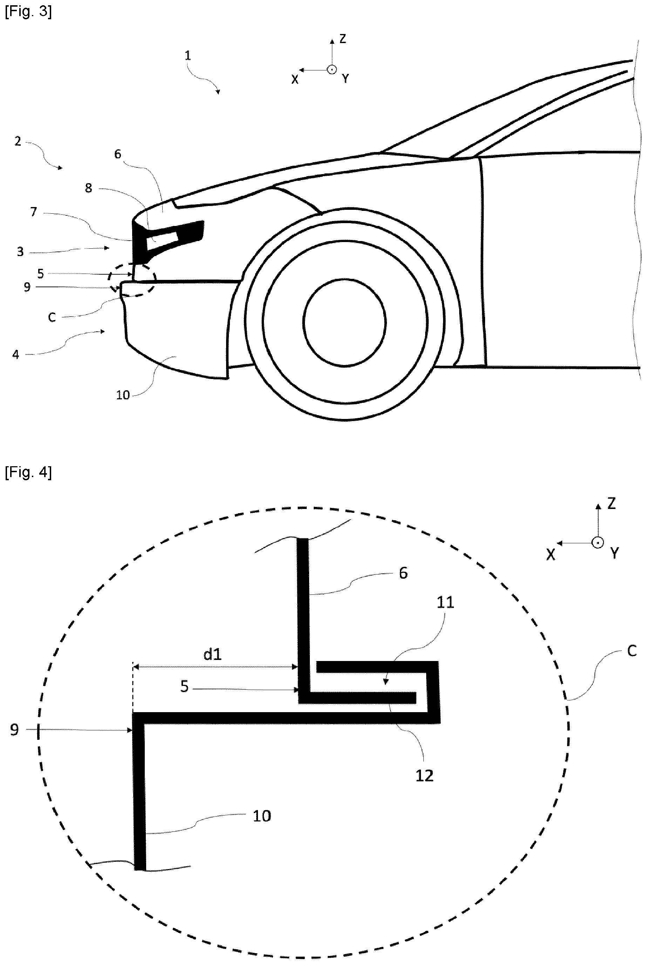

Comme illustré aux figures 4 et 5, une extrémité supérieure de la portion inférieure 4 et une extrémité inférieure de la portion supérieure 3 sont adjacentes et décalées horizontalement le long de l'axe longitudinal X du véhicule 1, de sorte que l'extrémité supérieure de la deuxième surface externe 9 de la portion inférieure 4 est située plus avant du véhicule 1 que l'extrémité inférieure adjacente de la première surface externe 5 de la portion supérieure 3. Ce décalage horizontal d1 est compris entre 10 et 100 mm selon les modes de réalisation, de préférence entre 20 et 80 mm, (figure 4).

Le décalage horizontal d1 le long de l'axe longitudinal X du véhicule 1 entre la portion inférieure 4 et la portion supérieure 3 de la face avant 2 engendre une mise en retrait de la portion supérieure 3 par rapport à la portion inférieure 4 (figures 3 et 4). Ainsi, lors d'un choc frontal, par exemple lors d'un choc à faible vitesse de type parking, la portion inférieure 4 de la face avant 2 est la première partie de la face avant 2 à subir le choc. La portion supérieure 3 étant en retrait, celle-ci n'est, au moins pendant une partie du choc, pas impactée par le choc. En conséquence, le module d'habillage 7 compris dans cette portion supérieure 3 de la face avant 2 n'est lui aussi pas impacté par ce choc. De cette manière, on réduit, voire on supprime, le risque d'endommagement du module d'habillage 7 lors d'un choc, notamment un choc « parking ». De manière préférée, la face avant 2 est configurée pour que l'extrémité inférieure de la portion supérieure 3 soit située verticalement (c'est-à-dire suivant l'axe Z) plus haut que les impacteurs que le véhicule 1 est susceptible de rencontrer, notamment lors d'un choc « parking ». Le module d'habillage 7 étant situé dans la portion supérieure 3, le risque qu'il soit endommagé lors d'un choc, notamment lors d'un choc « parking », est encore réduit.

Le décalage horizontal d1 compris entre 10 et 100 mm, de préférence entre 20 et 80 mm, est suffisamment grand pour que, lors d'un choc de type parking, la portion inférieure 4 absorbe tout ou une plus grande partie de la déformation due au choc, réduisant, voire supprimant, la déformation reçue par la portion supérieure 3. Autrement dit, la portion inférieur 4 forme une proéminence par rapport à la portion supérieure 3 au niveau d'une surface externe de la face avant 2. Le décalage d1 peut être adapté selon les modes de réalisation, par exemple en fonction des propriétés d'absorption de choc de la portion inférieure 4 de la face avant 2.

Par ailleurs, comme illustré à la figure 5, le panneau inférieur 10 est configuré pour être déplaçable sur une course de 10 à 100 mm, de préférence de 20 à 80 mm, en direction de l'arrière du véhicule 1 indépendamment du panneau supérieur 6 lors d'un choc au niveau de la deuxième surface externe 9. Ainsi, le panneau inférieur 10 peut absorber une plus grande partie de la déformation due au choc sans que cela n'impacte le panneau supérieur 6 de la portion supérieur 3. Le risque d'endommager lors d'un choc le module d'habillage 7 compris dans le panneau supérieur 3 est ainsi réduit. Dans le cas particulier d'un choc à faible énergie cinétique, il est possible que cette énergie cinétique soit suffisamment faible pour ne pas engendrer de déplacement du panneau inférieur 10 mais entrainer seulement une légère déformation locale.

On comprend que, lors d'un choc, le panneau inférieur 10 peut être déplacé vers l'arrière du véhicule 1 selon un mouvement comprenant en moins en partie une composante suivant l'axe longitudinal X du véhicule 1.

Selon le premier mode de réalisation, le panneau inférieur 10 et le panneau supérieur 6 ne sont pas fixés l'un à l'autre. Dans le cas présent, l'extrémité supérieure du panneau inférieur 10 forme un dégagement, l'extrémité inférieure du panneau supérieur 6 étant agencée dans le dégagement à distance et en regard de l'extrémité supérieure du panneau inférieur 10. Il s'agit d'un moyen simple et peu coûteux d'obtenir une face avant 2 pour laquelle, depuis l'extérieur, les panneaux supérieur 6 et inférieur 10 semblent affleurants tout en conservant la capacité du panneau inférieur 10 à se déplacer indépendamment du panneau supérieur 6 lors d'un choc. Plus particulièrement, dans le cas présent le dégagement forme une rainure 11 et l'extrémité inférieure du panneau supérieure 6 forme une languette 12, aussi appelée bord tombé, agencée dans la rainure 11. On comprend que la rainure 11 et la languette 12 ont une forme générale allongée le long de l'axe transversal Y du véhicule 1.

Comme illustré à la figure 5, lors d'un choc, le panneau inférieur 10 est déplacé vers l'arrière du véhicule 1, par exemple le long de l'axe longitudinal X du véhicule 1. Lors de ce déplacement, le décalage horizontal d1 entre l'extrémité inférieure de la première surface externe 5 et l'extrémité supérieure adjacente de la deuxième surface externe 9 est réduit. Toutefois, on remarque que le panneau supérieur 6 et le panneau inférieur 10 sont agencés de sorte que, à la suite du déplacement du panneau inférieur 10 occasionné par le choc, il demeure un décalage horizontal réduit d1' permettant de dissimuler depuis l'extérieur un éventuel arrière-plan technique peu esthétique.

La rainure 11 et la languette 12 s'étendent dans un même plan sensiblement horizontal lorsque la face avant 2 est montée sur le véhicule 1 (figures 4 et 5). Ainsi, lors d'un choc, le panneau inférieur 10 peut être déplacé vers l'arrière le long de l'axe longitudinal X du véhicule 1 sans que ce déplacement ne soit perturbé par des contacts entre la languette 12 et la rainure 11. On assure par la même occasion que le déplacement du panneau inférieur 10 n'entraine pas un déplacement du panneau supérieur 6 ce qui risquerait d'endommager le module d'habillage 7.

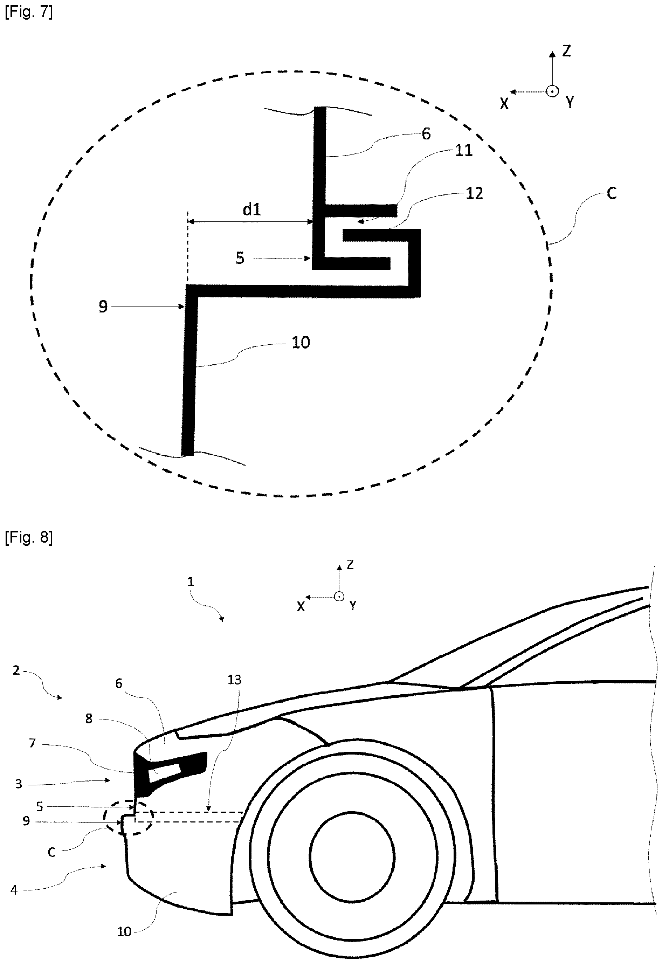

Selon un troisième mode de réalisation représenté à la figure 7, on peut prévoir que l'extrémité inférieure du panneau supérieur 6 forme un dégagement formant une rainure 11 et que l'extrémité supérieure du panneau inférieur 10 forme une languette 12 agencée dans la rainure 11 en regard et à distance de cette rainure 11. On comprend que ce mode de réalisation offre les mêmes avantages que ceux du mode de réalisation décrit précédemment et n'en diffère que par le positionnement inversé de la rainure 11 et de la languette 12 passant respectivement des panneaux inférieure 10 et supérieur 6 aux panneaux supérieur 6 et inférieur 10.

L'agencement de l'extrémité supérieure du panneau inférieur 10 par rapport à l'extrémité inférieure du panneau supérieur 6 peut varier selon les modes de réalisation. On remarque qu'il est avantageux qu'au moins une partie de l'extrémité supérieure de la portion inférieure 4 et/ou au moins une partie de l'extrémité inférieure de la portion supérieure 3 s'étendent dans un plan sensiblement horizontal lorsque la face avant 2 est montée sur le véhicule 1. En effet, comme indiqué ci-dessus, un tel agencement permet un déplacement du panneau inférieur 10 indépendamment d'un déplacement du panneau supérieur 6 afin de réduire le risque d'endommager le module d'habillage 7 lors d'un choc.

L'invention n'est pas limitée aux modes de réalisation présentés et d'autres modes de réalisation apparaîtront clairement à l'homme du métier.

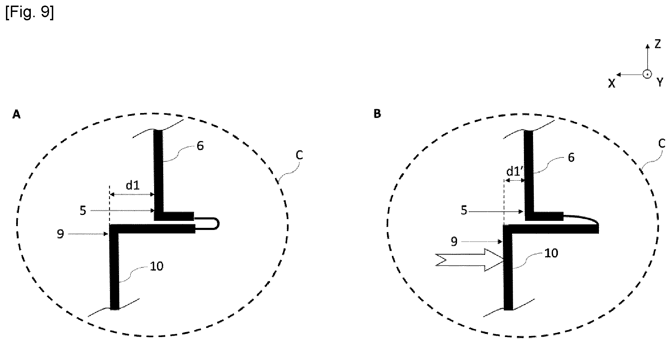

Notamment, selon un quatrième mode de réalisation illustré aux figures 8 et 9, le panneau supérieur 6 et le panneau inférieur 10 sont venus de matière. Ainsi, le panneau supérieur 6 et le panneau inférieur 10 ne forment qu'une seule pièce, ce qui facilite l'intégration de la face avant 2 sur le véhicule 1 et permet d'obtenir une face avant 2 présentant une continuité de forme, créant un effet visuel avantageux.

Dans le cas où les panneaux supérieur 6 et inférieur 10 sont venus de matière, on peut en outre prévoir que la portion de la face avant 2 à la jonction entre le panneau supérieur et le panneau inférieur forme une zone de liaison 13 configurée pour se déformer ou se rompre lors d'un choc, par exemple un choc parking, au niveau de la deuxième surface externe 9 de la portion inférieure 4. Ainsi, lors d'un tel choc, la zone de liaison 13 se déforme ou se rompt facilement, permettant un déplacement de la portion inférieure 4 indépendamment de la portion supérieure 3. Par exemple, selon le quatrième mode de réalisation présenté, on peut prévoir que la zone de liaison 13 est plus souple que le reste de la face avant 2 en diminuant l'épaisseur de la matière au niveau de la zone de liaison 13, permettant ainsi au panneau inférieur 10 de se déplacer indépendamment du panneau supérieur 6. La figure 9A représente une configuration avant un éventuel choc. La figure 9B représente une configuration après ou pendant un choc. On remarque que la zone de liaison 13 souple se déforme lors du choc, permettant un déplacement du panneau inférieur 10 indépendamment du panneau supérieur 6. Ainsi, la portion inférieure 4 absorbe la déformation ou une plus grande partie de la déformation due au choc sans que cette déformation ou cet impact ne soit répercuté sur la portion supérieure 3, préservant ainsi cette dernière, et plus particulièrement le module d'habillage 7, d'un potentiel endommagement. La zone de liaison 13 peut être formée selon toutes techniques connues de l'homme du métier.

Dans le cas où les panneaux supérieur 6 et inférieur 10 sont venus de matière, on peut également prévoir que le panneau inférieur 10 est plus souple que le panneau supérieur 6 - le panneau supérieur 6 est donc plus raide que le panneau inférieur 10. Ainsi, lors d'un choc, par exemple lors d'un choc de type « parking », la force du choc est suffisante pour entrainer une déformation du panneau inférieur 10 mais n'est pas suffisante pour entrainer une déformation du panneau supérieur 6 si l'énergie du choc est en partie transmise du panneau inférieur 10 au panneau supérieur 6. Le risque d'endommagement du module d'habillage 7 compris dans le panneau supérieur 6 est ainsi réduit.

Selon un autre mode de réalisation (non représenté), l'extrémité supérieure du panneau inférieure 10 et l'extrémité inférieure du panneau inférieur forment des moyens complémentaires de fixation frangibles du panneau inférieur 10 au panneau supérieur 6, configurés pour se rompre lors d'un choc au niveau de la deuxième surface externe 9. On peut prévoir, par exemple, de fixer le panneau inférieur 10 sur le panneau supérieur 6 par clipsage, les parties du panneau inférieur 10 impliquée dans le clipsage étant configurées pour se rompre lors d'un choc au niveau de la deuxième face externe 9. Alternativement, on peut prévoir d'utiliser des clips rapportés sur l'extrémité supérieure du panneau inférieur 10 et sur l'extrémité inférieure du panneau supérieur 6, ces clips étant configurées pour se rompre lors d'un choc au niveau de la deuxième face externe 9.

### Liste de références

1 : véhicule automobile
2 : face avant
3 : portion supérieure de la face avant
4 : portion inférieure de la face avant
5 : première surface externe
6 : panneau supérieur
7 : module d'habillage
8 : unité optique
9 : deuxième surface externe
10 : panneau inférieur
11 : rainure
12 : languette
13 : zone de liaison
14 : orifice du panneau supérieur
d1 : décalage horizontal
d1' : décalage horizontal réduit

## Revendications

1. Face avant (2) pour véhicule automobile (1) **caractérisée en ce qu'**elle comprend :
- une portion supérieure (3) présentant une première surface externe (5) visible depuis l'extérieur du véhicule (1) et comprenant un panneau supérieur (6) en matière plastique et un module d'habillage (7) comprenant un organe de diffusion d'ondes électromagnétiques et une surface externe transparente ou translucide auxdites ondes électromagnétiques, le module d'habillage (7) étant destiné à être fixé à une structure support du véhicule (1),
- une portion inférieure (4), présentant une deuxième surface externe (9) visible depuis l'extérieur du véhicule (1) et comprenant un panneau inférieur (10) en matière plastique, une extrémité supérieure du panneau inférieur (10) étant adjacente à une extrémité inférieure du panneau supérieur (6),
dans laquelle le panneau inférieur (10) est configuré pour être déplaçable en direction d'un arrière du véhicule (1), indépendamment du panneau supérieur (6), lors d'un choc au niveau de la deuxième surface externe (9) de la portion inférieure.

2. Face avant (2) selon la revendication 1, dans laquelle le panneau inférieur (10) est configuré pour être déplaçable sur une course de 10 à 100 mm le long de l'axe longitudinal (X) du véhicule (1), en direction d'un arrière du véhicule (1), indépendamment du panneau supérieur (6).

3. Face avant (2) selon la revendication 1 ou 2, dans laquelle l'extrémité supérieure du panneau inférieur (10) et l'extrémité inférieure du panneau supérieur (6) forment des moyens complémentaires de fixation déformables ou frangibles du panneau inférieur (10) au panneau supérieur (6) configurés pour se déformer ou se rompre lors d'un choc au niveau de la deuxième surface externe (9) de la portion inférieure (4).

4. Face avant (2) selon la revendication 1 ou 2, dans laquelle l'extrémité supérieure du panneau inférieur (10) forme un dégagement, l'extrémité inférieure du panneau supérieur (6) étant agencée dans le dégagement à distance et en regard de l'extrémité supérieure du panneau inférieur (10).

5. Face avant (2) selon la revendication 4, dans laquelle l'extrémité supérieure du panneau inférieur (10) forme une rainure (11) et l'extrémité inférieure du panneau supérieur (6) forme une languette (12) agencée dans la rainure (11).

6. Face avant (2) selon la revendication 1 ou 2, dans laquelle l'extrémité inférieure du panneau supérieur (6) forme un dégagement, l'extrémité supérieure du panneau inférieur (10) étant agencée dans le dégagement en regard de l'extrémité inférieure du panneau supérieure (6).

7. Face avant (2) selon la revendication 6, dans laquelle l'extrémité inférieure du panneau supérieur (6) forme une rainure (11) et l'extrémité supérieure du panneau inférieur (10) forme une languette (12) agencée dans la rainure (11).

8. Face avant (2) selon la revendication 5 ou 7, dans laquelle la rainure (11) et la languette (12) s'étendent dans un même plan sensiblement horizontal lorsque la face avant (2) est montée sur le véhicule (1).

9. Face avant (2) selon l'une quelconque des revendications précédentes, dans laquelle la portion inférieure (4) forme une proéminence par rapport à la portion supérieure (3) au niveau d'une surface externe de la face avant (2).

10. Face avant (2) selon l'une quelconque des revendications précédentes, comprenant en outre deux unités optiques (8) intégrées dans le module d'habillage (7), les unités optiques (8) étant agencées respectivement au niveau de deux extrémités latérales opposées du module d'habillage (7).

11. Véhicule automobile (1) **caractérisé en ce qu'**il comprend une face avant (2) selon l'une quelconque des revendications 1 à 10.
